# EUROPÄISCHE PATENTANMELDUNG

(11) **EP 2 987 676 A1**
(43) Veröffentlichungstag der Anmeldung: **24.02.2016**
(21) Anmeldenummer: 14002915.8
(22) Anmeldetag: 22.08.2014
(51) Int. Cl.: B60L 11/18

(54) **Übernahmeeinrichtung zur Aufnahme von elektrischer Energie von einer in einem überfahrbaren Untergrund verlegten, elektrische Energie führenden Einrichtung zum Laden von elektrischen Speichereinheiten in einem Fahrzeug**

(71) Anmelder: Hübner GmbH & Co. KG, 34123 Kassel (DE)
(72) Erfinder: Fülling, Jürgen, 34388 Trendelburg (DE); Schuster, Heinz, 34123 Kassel (DE); Klöckl, Frank, 34587 Felsberg (DE)
(74) Vertreter: Walther, Walther & Hinz GbR

(57) **Zusammenfassung**

Gegenstand der Erfindung ist eine Übernahmeeinrichtung (10) zur Aufnahme von elektrischer Energie von einer in einem überfahrbaren Untergrund (12) verlegten, elektrische Energie führenden Einrichtung zum Laden von elektrischen Speichereinheiten in einem Fahrzeug, wobei die Übernahmeeinrichtung (10) einen Stromabnehmer (18) umfasst, der aus einer ersten Stellung im Bereich des Fahrzeugbodens (6) in eine zweite Stelle unmittelbar auf oder über dem Untergrund (12) überführbar ist, wobei zur Überbrückung des Abstandes zwischen dem Fahrzeugboden (6) und dem Stromabnehmer (18) eine ringförmige, in der Höhe verformbare Abdeckung vorgesehen ist.

## Beschreibung

Die Erfindung betrifft eine Übernahmeeinrichtung zur Aufnahme von elektrischer Energie von einer in einem überfahrbaren Untergrund verlegten, elektrische Energie führenden Einrichtung zum Laden von elektrischen Speichereinheiten in einem Fahrzeug, wobei die Übernahmeeinrichtung einen Stromabnehmer umfasst, der aus einer ersten Stellung im Bereich des Fahrzeugbodens in eine zweite Stellung unmittelbar auf oder über dem Untergrund überführbar ist.

Insbesondere im städtischen Bereich ist man bestrebt, die Elektromobilität zu fördern. Das heißt, ein Ziel der Verkehrsplanung besteht darin, eine Vielzahl von Elektrofahrzeugen, insbesondere im städtischen Verkehr, einzusetzen, um der Luftverschmutzung Einhalt zu gebieten.

Elektrofahrzeuge besitzen einen elektrischen Energiespeicher, insbesondere Batterien. Die Kapazität solcher Batterien ist durchaus begrenzt, weshalb die Möglichkeit des Ladens solcher Batterien geschaffen werden muss, damit der Elektromobilität zur Bereitstellung einer vernünftigen Reichweite der Durchbruch gelingt. Geladen werden können solche elektrischen Speichereinheiten in Form von Batterien induktiv oder auch konduktiv. Das konduktive Laden von solchen elektrischen Speichereinheiten bedingt die Verwendung von Ladekabeln. Beim induktiven Laden hingegen wird der Ladestrom elektromagnetisch und damit berührungslos von einer Spule auf eine andere Spule übertragen. Die Energie abgebende Spule kann hierbei flächenbündig, beispielsweise in dem von dem Fahrzeug zu überfahrenden Untergrund verlegt sein, wobei dann, wenn sich das Fahrzeug über dem Ladefeld und damit über dieser Spule befindet, die Beladung der elektrischen Speichereinheit erfolgt. Bei der induktiven Energieübertragung ist der Wirkungsgrad in etwa gleich hoch wie bei konduktiven Systemen. Insbesondere in Hinblick auf die zu übertragende Leistung ist allerdings zu beachten, dass das Einbringen eines elektromagnetischen Feldes durch in der Nähe des Stromabnehmers liegende metallische Teile, dort parasitäre Ströme erzeugt, die in diesen Bauteilen zu einer entsprechenden Erwärmung führen. Das heißt, befindet sich beispielsweise eine Blechdose im Bereich des Stromabnehmers, so führt eine Stromübertragung nicht nur zu einer signifikanten Erhöhung der Temperatur dieser Blechdose mit der Folge, dass die Blechdose gegebenenfalls schmilzt und Metallspritzer die Übernahmeeinrichtung und hier insbesondere auch den Stromabnehmer beschädigen, sondern sie führt auch dazu, dass die oben genannten parasitären Ströme entstehen, die für eine Reduktion des Wirkungsgrades sorgen.

Die der Erfindung zugrunde liegende Aufgabe besteht somit darin, zu verhindern, dass elektrisch leitende metallische Teile in den Bereich des Stromabnehmers gelangen, um einerseits Beschädigungen an der Übernahmeeinrichtung und hier insbesondere dem Stromabnehmer durch Schmelzen des Metalls zu vermeiden und andererseits um den Wirkungsgrad nicht zu beeinträchtigen.

Zur Lösung der Aufgabe wird erfindungsgemäß vorgeschlagen, dass zur Überbrückung des Abstandes zwischen dem Fahrzeugboden und dem Stromabnehmer eine ringförmige, in der Höhe verformbare Abdeckung vorgesehen ist. Durch eine solche Abdeckung, die den Ringraum zwischen dem Fahrzeugboden einerseits und dem Stromabnehmer im ausgefahrenen Zustand andererseits überbrückt, wird verhindert, dass von außen, beispielsweise Coladosen, in den Bereich des Stromabnehmers z. B. durch Kicken mit dem Fuß gelangen können.

Vorteilhafte Merkmale und Ausgestaltungen der Erfindung ergeben sich aus den Unteransprüchen.

So ist nach einem besonderen Merkmal der Erfindung vorgesehen, dass die verformbare Abdeckung eine Öffnung zur Aufnahme eines Schachtes für elektrische Leitungen für den Stromabnehmer aufweist. Hieraus wird deutlich, dass die elektrischen Leitungen für den Stromabnehmer, deren Querschnitte nicht unerheblich sind, da innerhalb kürzerer Zeit erhebliche Leistungen übertragen werden müssen, in einem Schacht verlaufen, durch den sie gesondert geschützt sind, und zwar nicht nur während der Ladephase, sondern auch während der Fahrphase, beispielsweise vor Steinschlag.

Weiterhin hat sich als vorteilhaft herausgestellt, wenn die Abdeckung als Balg, und hier insbesondere als Faltenbalg, ausgebildet ist. Insbesondere die Verwendung eines Faltenbalges hat sich insofern als vorteilhaft herausgestellt, als ein Faltenbalg relativ flach baut. Dies ist von hoher Relevanz insofern, als viele der heutzutage eingesetzten Busse nur noch eine geringe Bodenfreiheit aufweisen. Denn als Niederflurbusse sollen sie nach Möglichkeit einen barrierefreien Zugang ermöglichen. Die Verwendung eines Faltenbalges ermöglicht somit eine flache Bauweise, die der Verwendung in einem Niederflurbus entgegenkommt.

In diesem Zusammenhang ist weiterhin vorgesehen, dass partiell die Falten des Faltenbalges radial versetzt zueinander verlaufen, was bedeutet, dass es sich hierbei um einen sogenannten eingezogenen Balg handelt. Bei einem eingezogenen Balg liegen die umlaufenden Kanten nicht übereinander, sondern radial versetzt zueinander, sodass die äußeren Kanten des Balges nicht in der Stärke auftragen.

Nach einem weiteren Merkmal der Erfindung ist vorgesehen, dass die Falten randseitig mit Einfassband verstärkt sind. Unter einem Einfassband wird ein Stoffstreifen verstanden, der U-förmig umlaufend die Kante des Balges erfasst. Die Verwendung eines derartigen Stoffstreifens als Einfassband hat den Vorteil, dass der Balg im Bereich des Einfassbandes in der Höhe kaum aufträgt, wobei hinzukommt, dass es sich bei dem Balg um einen, wie bereits an anderer Stelle erläutert, eingezogenen Balg handelt.

Als besonders vorteilhaft hat sich herausgestellt, wenn der Stromabnehmer auf der Unterseite eine rahmenförmige Platte aufweist, an der der Balg befestigt ist. Mit dieser rahmenförmig umlaufenden Platte an der Unterseite des Stromabnehmers liegt der Stromabnehmer auf dem Untergrund im Bereich der elektrischen Energie führenden Einrichtung, die dem Laden der elektrischen Speichereinheiten dient, auf. Um zu verhindern, dass die Platte, die insbesondere aus einem Kunststoff ausgebildet ist, also einem elektrisch nicht leitenden Material, mit der Unterseite unmittelbar z. B. auf dem Asphalt aufliegt und insofern einem erhöhten Verschleiß unterworfen sein kann, ist auf der dem Untergrund zugewandten Seite der Platte eine flexible umlaufende Leiste vorgesehen, die auf dem Untergrund aufliegt, und die insbesondere auch in der Lage ist, Unebenheiten des Untergrundes zu kompensieren. Dies insbesondere auch, um zu verhindern, dass metallische Gegenstände durch den Abstand zwischen Platte und Untergrund gelangen können. Die flexibel umlaufende Leiste ist vorteilhaft als Bürstenleiste ausgebildet, was den Vorteil hat, dass selbst dann, wenn kurz vor dem Stillstand des Fahrzeuges der Stromabnehmer der Übernahmeeinrichtung bereits abgesenkt wird, dies zu keinen bleibenden Schäden führt, da eine Bürstenleiste ohne Einschränkung ihrer Funktionalität durchaus über einige Meter den Untergrund berührend geführt werden kann. Die Bürstenleiste sorgt allerdings nicht nur für die Verminderung des Verschleißes an der Kunststoffplatte bzw. den Stromabnehmern, sondern sorgt auch dafür, ganz ähnlich wie der Balg, wie zuvor kurz erwähnt, dass von außen elektrisch leitende Materialien, also z. B. Blechdosen oder Ähnliches, auch im zusammengedrückten Zustand nicht in den Bereich des Stromabnehmers gelangen können, wo sie die Probleme verursachen können, die bereits zuvor an anderer Stelle erläutert worden sind.

Anhand der Zeichnungen wird die Erfindung nachstehend beispielhaft näher erläutert.
- Fig. 1: zeigt schematisch den Fahrzeugboden eines Busses, wobei der Stromabnehmer im eingefahrenen Zustand dargestellt ist;
- Fig. 2: zeigt eine Darstellung gemäß Fig. 1, wobei jedoch der Stromabnehmer in Richtung des Untergrundes ausgefahren ist;
- Fig. 3: zeigt eine Ansicht von unten auf die Übernahmeeinrichtung;
- Fig. 4: zeigt eine Darstellung gemäß Fig. 2, wobei jedoch der Balg und die Bürstenleiste angedeutet sind;
- Fig. 5: zeigt schematisch die Ausbildung eines sogenannten eingezogenen Balges;
- Fig. 6: zeigt einen Schnitt gemäß der Linie VI-VI aus Fig. 4.

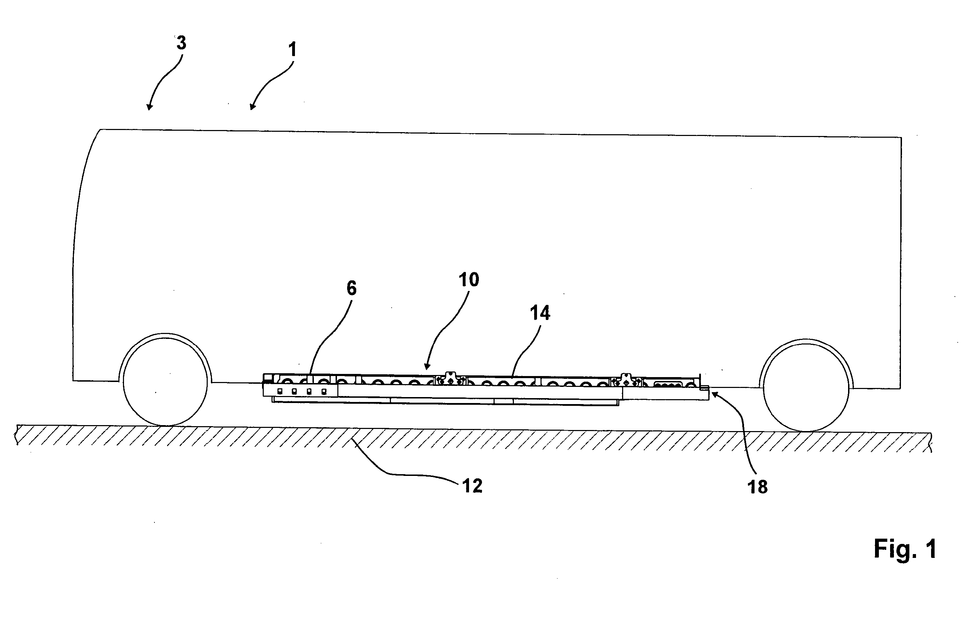

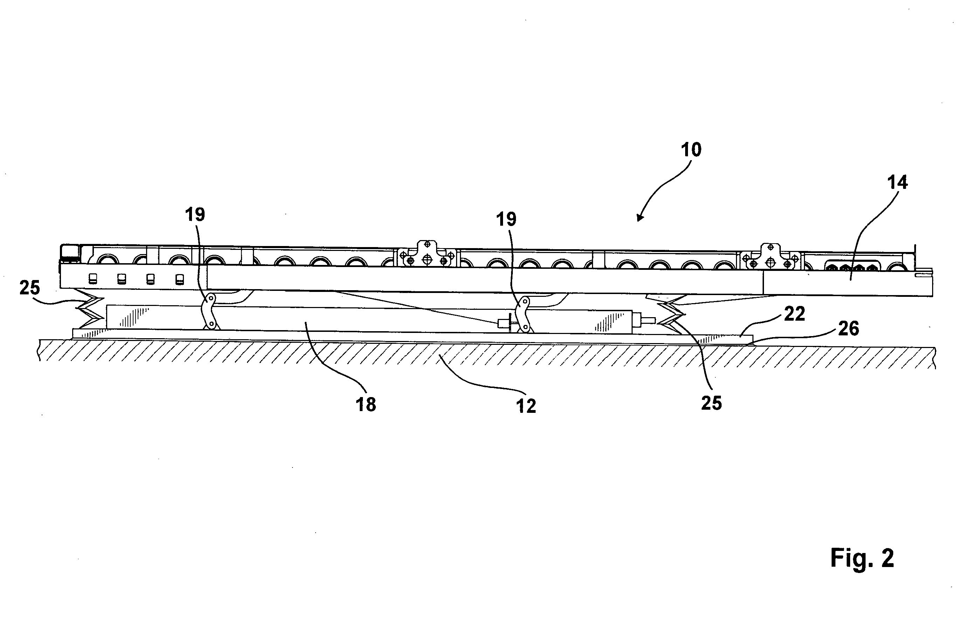

Gemäß Fig. 1 und Fig. 2 besitzt der mit 3 bezeichnete Bus das Chassis 1. Der Fahrzeugboden des Chassis 1 des Busses 3, der lediglich schematisch dargestellt ist, besitzt das Bezugszeichen 6. An der Unterseite des Fahrzeugbodens 6 befindet sich die Übernahmeeinrichtung 10 zur Aufnahme von elektrischer Energie von einer in einem überfahrbaren Untergrund 12 verlegten elektrische Energie führenden Einrichtung zum Laden von beispielsweise Batteriespeichern in einem Fahrzeug. Die Übernahmeeinrichtung 10 umfasst eine Kassette 14, wobei die Kassette 14 der Aufnahme des insgesamt mit 18 bezeichneten Stromabnehmers dient. Der Stromabnehmer selbst ist in Fig. 1 nicht erkennbar, da er sich, wie bereits ausgeführt, im Bereich der Kassette 14 befindet.

Bei Betrachtung der Fig. 2 ist nun allerdings erkennbar, dass der Stromabnehmer 18 durch eine Kniehebelmechanik 19 in die ausgefahrene Position überführt worden ist, in der der Stromabnehmer 18 in der Lage ist, induktiv Strom von der in dem Untergrund 12 verlegten Spule (nicht dargestellt) zu übernehmen.

Der Stromabnehmer 18 besitzt auf seiner Unterseite eine umlaufende ringförmige oder rahmenartige Platte 22, die an dem Stromabnehmer 18 befestigt ist. Zwischen der Kassette 14 und der Platte 22 befindet sich der gleichfalls um den Stromabnehmer 18 herumgeführte Faltenbalg 25. Durch den Faltenbalg 25 wird verhindert, das etwaige metallische Gegenstände in den Bereich des Stromabnehmers gelangen können, und dort zu einer Schädigung des Stromabnehmers führen können bzw. das Entstehen von parasitären Strömen begünstigen. Auf der Unterseite der Platte 22, also dem Untergrund 12 zugerichtet, weist die Platte die umlaufende Bürstenleiste 26 auf.

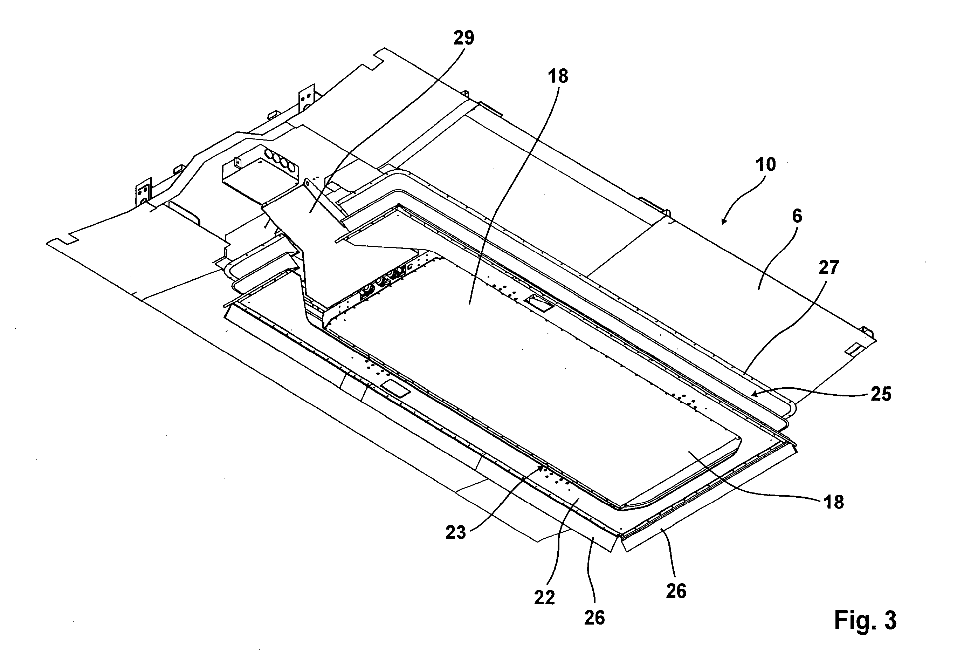

Aus der Fig. 3 ergibt sich detaillierter der Aufbau der insgesamt mit 10 bezeichneten Übernahmeeinrichtung. Erkennbar ist wiederum die Platte 22 aus Kunststoff, die rahmenförmig umlaufend ausgebildet ist, und in der Aussparung 23 zentrisch den Stromabnehmer 18 aufweist. Zwischen der Platte 22 und dem Fahrzeugboden 6 befindet sich der mit 25 bezeichnete Balg, wobei erkennbar ist, dass durch einen ebenfalls umlaufenden Balgrahmen 27 der Balg mit dem Fahrzeugboden 6 verbunden ist. Erkennbar ist ebenfalls wiederum die Bürstenleiste 26, die im Bereich der Kanten der Platte 22 an der Platte angebracht ist. Weiterhin ist erkennbar der Schacht 29 für die elektrischen Zuleitungen für den Stromabnehmer 18.

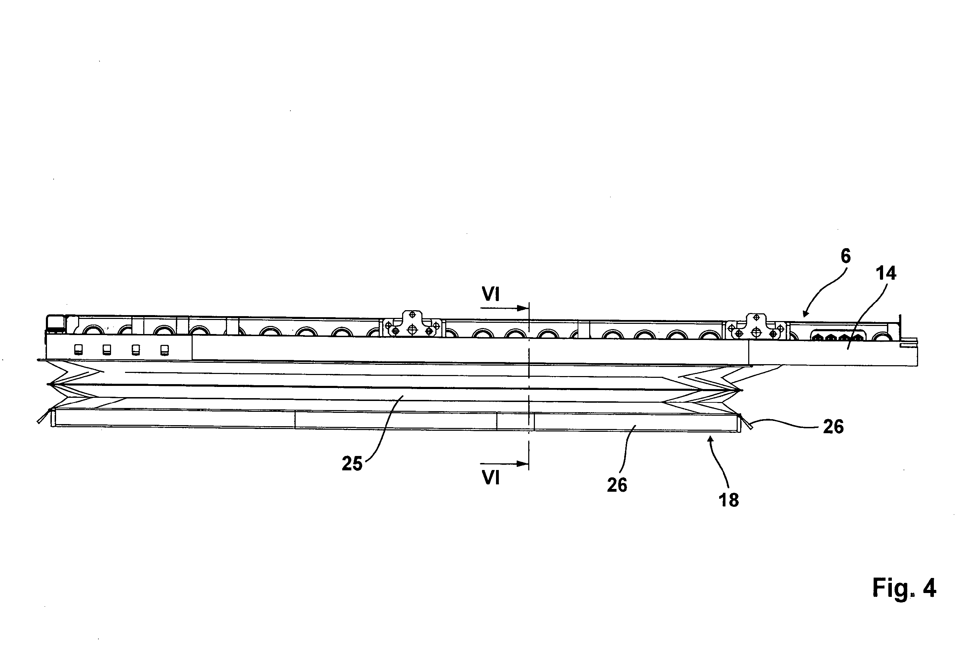

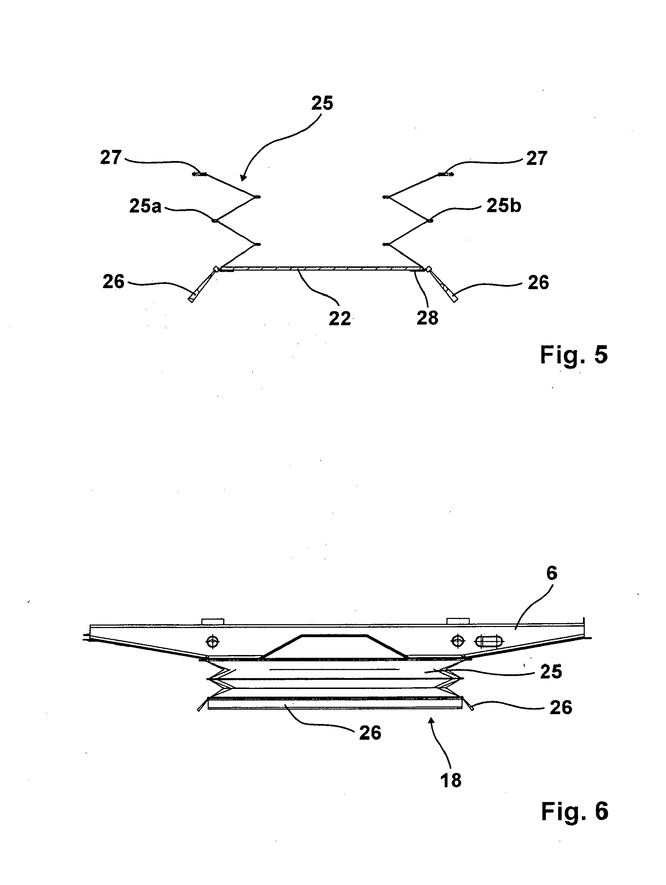

Die Fig. 5 zeigt eine schematische Schnittdarstellung von Fig. 4; die die Ausbildung der Übernahmeeinrichtung 10 deutlich erkennen lässt. Hierbei ist insbesondere erkennbar, was unter einem sogenannten eingezogenen Faltenbalg zu verstehen ist. Erkennbar ist, dass der Faltenbalg 25 im Außenrandbereich einen Scheitel 25a zeigt, wobei der Scheitelpunkt 25a versetzt zu dem umlaufenden Balgrahmen 27 verläuft. Das heißt, im zusammengelegten Zustand gelangt der Scheitel 25a mit dem Einfassband 25b nicht in den Bereich des umlaufenden Balgrahmens 27. Dies sorgt für eine geringe Höhe des Faltenbalges. Im Gegensatz dazu sind die Scheitel auf der Innenseite des Faltenbalges 25 nicht versetzt zueinander angeordnet, da die rahmenförmig umlaufende Platte 22 in diesem Bereich die Aussparung 23 für den Stromabnehmer 18 zeigt. In diesem Bereich ist die Höhe des Balges im zusammengelegten Zustand insofern von nur geringer Relevanz, da der Faltenbalg in die Aussparung 23 eintauchen kann.

Des Weiteren ist erkennbar, dass sowohl der Balg als auch die Bürstenleiste 26, mithin die flexible umlaufende Leiste, an der Platte 22 beide durch Kunststoffclipse umlaufend befestigt sind. Auch dies sorgt für eine geringe Höhe der gesamten Übernahmeeinrichtung 10.

### Bezugszeichenliste:

- 1: Chassis
- 3: Bus
- 6: Fahrzeugboden
- 10: Übernahmeeinrichtung
- 12: Untergrund
- 14: Kassette
- 18: Stromabnehmer
- 19: Kniehebelmechanik
- 22: ringförmige Platte
- 23: Aussparung in der Platte
- 25: Faltenbalg
- 25a: Scheitel der Falte des Faltenbalges
- 25b: Einfassband
- 26: Bürstenleiste
- 27: Balgrahmen
- 28: Kunststoffclips
- 29: Schacht

## Patentansprüche

1. Übernahmeeinrichtung (10) zur Aufnahme von elektrischer Energie von einer in einem überfahrbaren Untergrund (12) verlegten, elektrische Energie führenden Einrichtung zum Laden von elektrischen Speichereinheiten in einem Fahrzeug, wobei die Übernahmeeinrichtung (10) einen Stromabnehmer (18) umfasst, der aus einer ersten Stellung im Bereich des Fahrzeugbodens (6) in eine zweite Stelle unmittelbar auf oder über dem Untergrund (12) überführbar ist,
**dadurch gekennzeichnet,**
**dass** zur Überbrückung des Abstandes zwischen dem Fahrzeugboden (6) und dem Stromabnehmer (18) eine ringförmige, in der Höhe verformbare Abdeckung vorgesehen ist.

2. Übernahmeeinrichtung (10) nach Anspruch 1,
**dadurch gekennzeichnet,**
**dass** die verformbare Abdeckung eine Öffnung zur Aufnahme eines Schachtes (29) für elektrische Leitungen für den Stromabnehmer (18) aufweist.

3. Übernahmeeinrichtung (10) nach einem der voranstehenden Ansprüche,
**dadurch gekennzeichnet,**
**dass** die Abdeckung als Balg ausgebildet ist.

4. Übernahmeeinrichtung (10) nach Anspruch 3,
**dadurch gekennzeichnet,**
**dass** der Balg als Faltenbalg (25) ausgebildet ist.

5. Übernahmeeinrichtung (10) nach Anspruch 4
**dadurch gekennzeichnet,**
**dass** partiell die Falten des Faltenbalges (25) radial versetzt zueinander verlaufen.

6. Übernahmeeinrichtung (10) nach Anspruch 5,
**dadurch gekennzeichnet,**
**dass** die Falten des Faltenbalges (25) randseitig mit Einfassband (25b) verstärkt sind.

7. Übernahmeeinrichtung (10) nach einem der Ansprüche 3 bis 6,
**dadurch gekennzeichnet,**
**dass** zur Verbindung des Balges mit dem Fahrzeugboden (6) ein umlaufender Balgrahmen (27) vorgesehen ist.

8. Übernahmeeinrichtung (10) nach einem der Ansprüche 3 bis 7,
**dadurch gekennzeichnet,**
**dass** der Stromabnehmer (18) auf der Unterseite eine rahmenförmige Platte (22) aufweist, an der der Balg (25) befestigt ist.

9. Übernahmeeinrichtung (10) nach Anspruch 8,
**dadurch gekennzeichnet,**
**dass** die Platte (22) auf der Unterseite eine flexible, umlaufende Leiste aufweist.

10. Übernahmeeinrichtung (10) nach Anspruch 9,
**dadurch gekennzeichnet,**
**dass** die Leiste als Bürstenleiste (26) ausgebildet ist.

11. Übernahmeeinrichtung (10) nach einem der Ansprüche 8 bis 10,
**dadurch gekennzeichnet,**
**dass** die rahmenförmige Platte (22) aus einem elektrisch nicht leitenden Material ausgebildet ist.

## Geänderte Patentansprüche

### Geänderte Patentansprüche gemäss Regel 137(2) EPÜ.

1. An einem Fahrzeug angeordnete Übernahmeeinrichtung (10) zur Aufnahme von elektrischer Energie von einer in einem überfahrbaren Untergrund (12) verlegten, elektrische Energie führenden Einrichtung zum Laden von elektrischen Speichereinheiten in einem Fahrzeug, wobei die Übernahmeeinrichtung (10) einen Stromabnehmer (18) umfasst, der aus einer ersten Stellung im Bereich des Fahrzeugbodens (6) in eine zweite Stellung unmittelbar auf oder über dem Untergrund (12) überführbar ist,
wobei zur Überbrückung des Abstandes zwischen dem Fahrzeugboden (6) und dem Stromabnehmer (18) eine ringförmige, in der Höhe verformbare Abdeckung vorgesehen ist,
**dadurch gekennzeichnet,**
**dass** der Stromabnehmer (18) auf der Unterseite eine rahmenförmige Platte (22) aufweist,
wobei die rahmenförmige Platte (22) auf der Unterseite eine flexible, umlaufende Leiste aufweist.

2. An einem Fahrzeug angeordnete Übernahmeeinrichtung (10) nach Anspruch 1,
**dadurch gekennzeichnet,**
**dass** die verformbare Abdeckung eine Öffnung zur Aufnahme eines Schachtes (29) für elektrische Leitungen für den Stromabnehmer (18) aufweist.

3. An einem Fahrzeug angeordnete Übernahmeeinrichtung (10) nach einem der voranstehenden Ansprüche,
**dadurch gekennzeichnet,**
**dass** die Abdeckung als Balg ausgebildet ist.

4. An einem Fahrzeug angeordnete Übernahmeeinrichtung (10) nach Anspruch 3,
**dadurch gekennzeichnet,**
**dass** der Balg als Faltenbalg (25) ausgebildet ist.

5. An einem Fahrzeug angeordnete Übernahmeeinrichtung (10) nach Anspruch 4
**dadurch gekennzeichnet,**
**dass** partiell die Falten des Faltenbalges (25) radial versetzt zueinander verlaufen.

6. An einem Fahrzeug angeordnete Übernahmeeinrichtung (10) nach einem der Ansprüche 4 oder 5,
**dadurch gekennzeichnet,**
**dass** die Falten des Faltenbalges (25) randseitig mit Einfassband (25b) verstärkt sind.

7. An einem Fahrzeug angeordnete Übernahmeeinrichtung (10) nach einem der Ansprüche 3 bis 6,
**dadurch gekennzeichnet,**
**dass** zur Verbindung des Balges mit dem Fahrzeugboden (6) ein umlaufender Balgrahmen (27) vorgesehen ist.

8. An einem Fahrzeug angeordnete Übernahmeeinrichtung (10) nach einem der Ansprüche 3 bis 7,
**dadurch gekennzeichnet,**
**dass** an der rahmenförmigen Platte (22) der Balg (25) befestigt ist.

9. An einem Fahrzeug angeordnete Übernahmeeinrichtung (10) nach Anspruch 8,
**dadurch gekennzeichnet**,

10. An einem Fahrzeug angeordnete Übernahmeeinrichtung (10) nach einem der voranstehenden Ansprüche,
**dadurch gekennzeichnet,**
**dass** die Leiste als Bürstenleiste (26) ausgebildet ist.

11. An einem Fahrzeug angeordnete Übernahmeeinrichtung (10) nach einem der voranstehenden Ansprüche,
**dadurch gekennzeichnet,**
**dass** die rahmenförmige Platte (22) aus einem elektrisch nicht leitenden Material ausgebildet ist.
